(19) Europäisches Patentamt
European Patent Office
Office européen des brevets

(11) **EP 2 602 739 A1**

(12) **EUROPÄISCHE PATENTANMELDUNG**

(43) Veröffentlichungstag:
**12.06.2013   Patentblatt 2013/24**

(51) Int Cl.:
**G06K 9/00** (2006.01)    **G06K 9/62** (2006.01)
**G06F 17/30** (2006.01)

(21) Anmeldenummer: **12170411.8**

(22) Anmeldetag: **01.06.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.12.2011   EP 11192437**

(71) Anmelder: **Siemens Aktiengesellschaft**
**80333 München (DE)**

(72) Erfinder:
• **Riegel, Thomas**
  **85662 Hohenbrunn (DE)**
• **Buschek, Daniel**
  **81541 München (DE)**

(54) **Vorrichtung und Verfahren zur automatischen Detektion eines Ereignisses in Sensordaten**

(57) Die vorliegende Erfindung schafft eine Vorrichtung zur automatischen Detektion eines Ereignisses in Sensordaten, mit einer Aufnahmeeinrichtung, welche dazu ausgebildet ist, die Sensordaten aufzunehmen, einer Merkmalsidentifikationseinrichtung, welche dazu ausgebildet ist, eine vorgegebene Menge von Merkmalen der Sensordaten in den aufgenommenen Sensordaten automatisch zu identifizieren, einer Bewertungserfassungseinrichtung, welche dazu ausgebildet ist, jeweils eine auf das zu detektierende Ereignis bezogene und basierend auf einem Satz von Bewertungskriterien gebildete Bewertung zu jedem der Merkmale aus der vorgegebenen Menge von Merkmalen zu erfassen, und mit einer Detektionseinrichtung, welche dazu ausgebildet ist, das zu detektierende Ereignis mittels der durch die Merkmalsidentifikationseinrichtung identifizierten Merkmale basierend auf den erfassten Bewertungen zu der vorgegebenen Menge von Merkmalen automatisch zu detektieren. Ferner offenbart die vorliegende Erfindung ein entsprechendes Verfahren.

FIG 1

EP 2 602 739 A1

**Beschreibung**

Technisches Gebiet

Die vorliegende Erfindung offenbart eine Vorrichtung zur automatischen Detektion eines Ereignisses in Sensordaten. Ferner offenbart die vorliegende Erfindung ein entsprechendes Verfahren.

Technischer Hintergrund

In vielen Anwendungen ist es notwendig, das Auftreten eines Ereignisses anhand von Sensordaten, z.B. einem Video, zu bestimmen.

Es ist z.B. in der Videoüberwachung notwendig, z.B. das Eindringen einer Person in ein Gebäude zu detektieren. Es kann z.B. aber auch notwendig sein, in den Aufzeichnungen eines Seismographen das Auftreten eines Erdbebens vorherzusagen.

Um solche Ereignisse bzw. das Auftreten solcher Ereignisse in einem Video oder in den Aufzeichnungen eines Seismographen zu detektieren werden heute unterschiedliche Computerunterstütze Verfahren angewendet.

Dabei werden z.B. bei Videosequenzen in denen man bestimmte Situationen oder Ereignisse finden möchte, für die aber keine direkten bzw. dedizierten Videoanalyseverfahren existieren, bestimmte Merkmale extrahiert. Dazu werden bekannte Merkmalsextraktoren (z.B. Änderungsdetektoren, Objekterkenner, etc.) genutzt, deren Ergebnisse nur Indizien bzw. Hinweise auf das Auftreten der gesuchten Situation bzw. des gesuchten Ereignisses sind. Daher werden heute alle Abschnitte, die wenigstens eines der Merkmale enthalten, aus den Videosequenzen extrahiert. Die entsprechenden Abschnitte müssen daraufhin von einem Menschen zur Bewertung und endgültigen Entscheidung in Augenschein genommen werden.

Insbesondere wenn sich die automatisch erzeugten Merkmale einzeln nur schlecht dazu eignen, dass Suchszenario zu beschreiben, ist eine zuverlässige Eingrenzung auf bzw. eine zuverlässige Ausgrenzung von Abschnitten einer Videosequenz nur in geringem Maße möglich, so dass eine sehr zeitaufwändige menschliche Überprüfung notwendig wird.

Schließlich kann eine Suche nach einem Ereignis interaktiv durch menschliche Expertise gelöst werden, wobei üblicherweise mit den Abschnitten begonnen wird, die die selektivsten Merkmale aufweisen und sequentiell alle in Frage kommenden Abschnitte durch einen Menschen bewertet werden.

Als Alternative bieten sich speziell trainierte Klassifikatoren an, die an Hand einer Trainingsmenge ihre internen Gewichte zu den gefundenen Merkmalen so lernen, dass der vorgegebene Trainingssatz mit der gewünschten Genauigkeit erkannt wird. Diese werden dann auf die Videosequenz angewendet. Diese Verfahren liefern allerding lediglich dann zufriedenstellende Ergebnisse, wenn der Trainingssatz in ausreichendem Maß mit der Videosequenz korreliert.

Ferner sind Suchsysteme bekannt, die eine gewichtete Summe einzelner Merkmale als Suchkriterium verwenden. Hierbei erfolgt eine Gewichtung der einzelnen Merkmalen mit einem Faktor z.B. zwischen 0 und 1. Die einzelnen gewichteten Maßzahlen der einzelnen Merkmale werden daraufhin aufsummiert und ergeben eine vergleichbare Maßzahl. Diese eindimensionalen Modelle bieten keine Möglichkeit, Unsicherheiten bei der Berechnung der Maßzahlen für die Merkmale zu berücksichtigen. Ferner sind die in diesen Systemen verwendeten Merkmale (z.B. Helligkeit, Kontrast, Farbe, etc.) ungeeignet, um eine inhaltsbasierte Suche (eine Suche nach bestimmten Ereignissen) durchzuführen.

Die EP 2333 736 A2 zeigt ein Verfahren, bei welchem Objekte in einem Video detektiert werden und die Situationen, in welchen sich die Objekte befinden, mittels der sog. "Subjective Logic" bewertet werden.

Zusammenfassung

Es ist daher eine Aufgabe der vorliegenden Erfindung, eine Möglichkeit bereitzustellen, Sensordaten automatisch auf das Auftreten eines Ereignisses hin zu untersuchen.

Diese Aufgabe wird erfindungsgemäß durch die Merkmale der unabhängigen Ansprüche gelöst.

Demgemäß ist vorgesehen:

- Eine Vorrichtung zur automatischen Detektion eines Ereignisses in Sensordaten, mit einer Aufnahmeeinrichtung, welche dazu ausgebildet ist, die Sensordaten aufzunehmen, einer Merkmalsidentifikationseinrichtung, welche dazu ausgebildet ist, eine vorgegebene Menge von Merkmalen der Sensordaten in den aufgenommenen Sensordaten automatisch zu identifizieren, einer Bewertungserfassungseinrichtung, welche dazu ausgebildet ist, jeweils eine auf das zu detektierende Ereignis bezogene und basierend auf einem Satz von Bewertungskriterien gebildete Bewertung zu jedem der Merkmale aus der vorgegebenen Menge von Merkmalen zu erfassen, und mit einer Detektionseinrichtung, welche dazu ausgebildet ist, das zu detektierende Ereignis mittels der durch die Merkmalsidentifikationseinrichtung identifizierten Merkmale basierend auf den erfassten Bewertungen zu der vorgegebenen Menge von Merkmalen automatisch zu detektieren.

- Ein Verfahren zum automatischen Detektieren eines Ereignisses in Sensordaten, mit den Schritten Aufnehmen der Sensordaten, automatisches Identifizieren einer vorgegebenen Menge von Merkmalen der Sensordaten aus den aufgenommenen Sensordaten, Erfassen jeweils einer auf das zu detektierende Ereignis bezogenen und basierend auf einem Satz von Bewertungskriterien gebildeten Bewertung zu jedem der Merkmale aus der vorgegebenen Menge von Merkmalen, und automatisches Detektieren des zu detektierenden Ereignisses mittels der identifizierten Merkmale basierend auf den erfassten Bewertungen zu der vorgegebenen Menge von Merkmalen.

Die der vorliegenden Erfindung zu Grunde liegende Erkenntnis besteht darin, dass für eine Analyse von Sensordaten einfache Merkmale, wie z.B. die Helligkeit oder die Sättigung eines Bildes bzw. Videos nur schlecht geeignet sind, um automatisch Rückschlüsse auf das Auftreten eines Ereignisses in den Sensordaten zu ziehen.

Die der vorliegenden Erfindung zu Grunde liegende Idee besteht nun darin, dieser Erkenntnis Rechnung zu tragen und eine Möglichkeit bereitzustellen, mit welcher höherwertige Merkmale der Sensordaten in die Detektion eines Ereignisses einbezogen werden können. Dabei sind unter höherwertigen Merkmalen diejenigen Merkmale zu verstehen, welche z.B. eine Analyse des Inhalts eines Bildes erfordern und welche nicht lediglich einfache technische Merkmale, wie z.B. Helligkeit oder die Sättigung, darstellen.

Um eine automatische Analyse von Sensordaten zu ermöglichen, sieht die vorliegende Erfindung daher vor, das Expertenwissen mindestens eines Experten zu einer gestellten Aufgabe, z.B. dem Erkennen einer Situation in einem Video, abzufragen und zur automatischen Analyse der Sensordaten zu nutzen.

Dazu sieht die vorliegende Erfindung vor, dass eine Aufnahmevorrichtung die Sensordaten aufnimmt, so dass diese daraufhin automatisch analysiert werden können.

Die vorliegende Erfindung sieht ferner eine Merkmalsidentifikationseinrichtung vor, welche bestimmte vorgegebene Merkmale aus den Sensordaten automatisch extrahiert. Dabei kann die Menge der vorgegebenen Merkmale z.B. durch die Verfügbarkeit von Analysealgorithmen und Analysemöglichkeiten für die jeweiligen Sensordaten vorgegeben sein.

Die vorliegende Erfindung beruht nun ferner auf der Erkenntnis, dass auch ein Mensch das Auftreten eines Ereignisses in den Sensordaten nie mit einhundertprozentiger Sicherheit bewerten kann. Vielmehr beurteilt ein Mensch eine Vielzahl von Merkmalen, welche er aus den Sensordaten extrahiert und beurteilt diese einzelnen Merkmale, aus welchen er anschließend eine Schlussfolgerung zieht.

Daher sieht die vorliegende Erfindung eine Bewertungserfassungseinrichtung vor, welche es einem Experten ermöglicht, zu jedem der Merkmale aus der Menge von Merkmalen, welche automatisch in den Sensordaten identifiziert werden können, eine Bewertung abzugeben. Dabei wird unter dem Begriff "Experte" eine Person verstanden, welche dazu in der Lage ist, die Merkmale bezüglich deren Relevanz für das zu detektierende Ereignisses zu beurteilen. Ein "Experte" muss also über kein besonderes Fachwissen verfügen, wenn dies zur Beurteilung des zu detektierenden Ereignisses irrelevant ist.

Dem Experten steht dabei ein Satz von Bewertungskriterien zur Verfügung, welcher dem Experten den Rahmen für die Bewertung der Merkmale vorgibt. Der Experte kann z.B. eine Relevanz eines Merkmals bewerten. Ferner kann der Experte z.B. auch bewerten, wie zuverlässig die automatische Identifikation eines der Merkmale durch die Merkmalsidentifikationseinrichtung ist.

Zur Abfrage der Bewertungen der einzelnen Merkmale bietet sich insbesondere ein Satz von Bewertungskriterien an, welcher den Regeln der "Subjective Logic" entspricht.

Die "Subjective Logic" ermöglicht es einem Experten eine Bewertung sehr intuitiv als eine "Subjective Opinion" mit Hilfe eines Opinion-Dreiecks abzugeben. Dabei besteht für den Experten die Möglichkeit in dem Opinion-Dreieck seine Einschätzung bezüglich des Zutreffens, des Nicht-Zutreffens, seiner Unsicherheit und eine A-priori-Wahrscheinlichkeit bezüglich des jeweiligen Merkmals anzugeben.

Weitere Informationen zur "Subjective Logic" können dem Dokument "Subjective Logic" von Audun Jøsang, University of Oslo, abzurufen unter "http://persons.unik.no/josang/papers/subjective-logic.pdf", entnommen werden.

Die Detektionseinrichtung stellt anschließend basierend auf den Bewertungen, insbesondere basierend auf der bewerteten Relevanz der einzelnen Merkmale für das zu detektierende Ereignis, und den in den Sensordaten identifizierten Merkmalen fest, ob das zu detektierende Ereignis in den Sensordaten enthalten ist.

Die vorliegende Erfindung ermöglicht es also, bei der Suche nach Ereignissen, die nicht direkt an Hand der beobachteten Merkmale detektiert werden können, diese Ereignisse in den Sensordaten anhand einer Kombination von schwachen Indizien zu detektieren. Dabei wird die Meinung eines Experten darüber abgefragt, inwieweit ein bestimmtes Merkmal zur Suchaufgabe beiträgt. Dies kann, wie oben bereits geschildert z.B. mit Hilfe des Opinion-Dreiecks erfolgen.

Vorteilhafte Ausführungsformen und Weiterbildungen ergeben sich aus den Unteransprüchen sowie aus der Beschreibung unter Bezugnahme auf die Figuren.

In einer Ausführungsform weist die Aufnahmeeinrichtung zumindest eine Kamera und/oder ein Mikrofon und/oder einen Positionssensor und/oder einen Lagesensor und/oder einen Beschleunigungsmesser und/oder einen Helligkeitssensor und/oder weitere Sensoren zur Aufnahme der Sensordaten auf. Dies ermöglicht es, auf einfache Weise eine Vielzahl von Sensordaten unterschiedlicher Art aufzunehmen.

In einer Ausführungsform ist die Merkmalsidentifikationseinrichtung dazu ausgebildet, beim Identifizieren in den aufgenommenen Sensordaten ein vorgegebenes Muster zu identifizieren. Dies ermöglicht es, das Auftreten bestimmter wiederkehrender Muster in den Sensordaten festzustellen. Dabei kann ein Muster ein bestimmtes visuelles Muster in einem Bild bzw. Video, aber auch ein hörbares Muster in einer Tonaufnahme, oder z.B. ein Muster in den Messreihen eines Lage-, Beschleunigungs-,Helligkeitssensors oder eines anderen Sensors (sowohl im Zeit- als auch im Frequenzbereich) sein.

Zusätzlich oder alternativ ist die Merkmalsidentifikationseinrichtung dazu ausgebildet, beim Identifizieren in als eine Bildaufnahme und/oder Videoaufnahme vorliegenden Sensordaten enthaltene Objekte zu identifizieren. Dies ermöglicht eine genaue Aussage über den Inhalt eines Bildes bzw. Videos zu treffen. Als Objekt ist dabei jedes beliebige Objekt zu verstehen, welches durch einen Merkmalsextraktor automatisch in den Sensordaten identifiziert werden kann.

Zusätzlich oder alternativ ist die Merkmalsidentifikationseinrichtung dazu ausgebildet, beim Identifizieren in der Bildaufnahme und/oder Videoaufnahme die Anzahl der vorhandenen Personen zu identifizieren. Diese Ausführungsform stellt einen Sonderfall eines Merkmalsextraktors dar und ermöglicht es, in einem Bild bzw. Video Personen zu identifizieren. Dies ist insbesondere dann von Vorteil, wenn die Personen mit dem zu detektierenden Ereignis in Verbindung stehen.

Zusätzlich oder alternativ ist die Merkmalsidentifikationseinrichtung dazu ausgebildet, beim Identifizieren in der Bildaufnahme und/oder Videoaufnahme die Ausrichtung und/oder Position und/oder Bewegungsrichtung und/oder Bewegung zumindest einer in der Bildaufnahme und/oder Videoaufnahme enthaltenen Personen zu identifizieren. Dies ermöglicht es, nicht nur das Vorhandensein einer Person in einem Bild bzw. Video zu identifizieren, sondern weitere Informationen bereitzustellen, die bei der Detektion des zu detektierenden Ereignisses hilfreich sein können.

Zusätzlich oder alternativ ist die Merkmalsidentifikationseinrichtung dazu ausgebildet, beim Identifizieren in der Videoaufnahme einen Wechsel zwischen zumindest zwei Szenen zu identifizieren. Einen Szenenwechsel in einem Video zu erkennen, ermöglicht es, ein Video in seine Bestandteile zu zerlegen, und diese separat zu analysieren.

Zusätzlich oder alternativ ist die Merkmalsidentifikationseinrichtung dazu ausgebildet, beim Identifizieren in als eine Tonaufnahme vorliegenden Sensordaten ein potentiell auf ein Auftreten des zu detektierenden Ereignisses hinweisendes Geräusch zu identifizieren. Das Erkennen eines vorgegebenen Geräusches entspricht einem Sonderfall einer Mustererkennung und ermöglicht es, Geräusche zu detektieren, die eindeutige Hinweise auf ein zu detektierendes Ereignis liefern.

Zusätzlich oder alternativ ist die Merkmalsidentifikationseinrichtung dazu ausgebildet, beim Identifizieren in der Tonaufnahme einen Wechsel zwischen zumindest zwei Szenen zu identifizieren. Einen Szenenwechsel in einer Tonaufnahme zu erkennen, ermöglicht es, die Tonaufnahme in ihre Bestandteile zu zerlegen, und diese separat zu analysieren.

Zusätzlich oder alternativ ist die Merkmalsidentifikationseinrichtung dazu ausgebildet, beim Identifizieren in der Tonaufnahme zumindest eine in der Tonaufnahme enthaltene Anzahl menschlicher Stimmen zu identifizieren. Diese Ausführungsform stellt einen Sonderfall eines Merkmalsextraktors dar und ermöglicht es, in einer Tonaufnahme Personen zu identifizieren. Dies ist insbesondere dann von Vorteil, wenn die Personen mit dem zu detektierenden Ereignis in Verbindung stehen.

In einer Ausführungsform weist der Satz von Bewertungskriterien einen Akzeptanzwert und/oder einen Ablehnungswert und/oder einen Unsicherheitswert und/oder einen Basis-Wert auf. Ferner ist die Bewertungserfassungseinrichtung dazu ausgebildet, zu jeder Bewertung einen entsprechenden Akzeptanzwert und/oder einen entsprechenden Ablehnungswert und/oder einen entsprechenden Unsicherheitswert und/oder einen entsprechenden Basis-Wert zu erfassen. Diese Werte entsprechen den in der "Subjective Logic" verwendeten Kennzahlen für die "Subjective Opinions". Werden die Bewertungen eines Experten entsprechend der "Subjective Logic" abgefragt, wird es sehr einfach möglich, zur Detektion eines zu detektierenden Ereignisses in den Sensordaten das Kalkül des "Subjective Logic" zu verwenden.

In einer Ausführungsform ist die Detektionseinrichtung dazu ausgebildet, zu den extrahierten Merkmalen basierend auf zu dem Satz von Bewertungskriterien korrespondierenden arithmetischen Regeln jeweils einen Opinionwert für zumindest einen Ausschnitt der aufgenommenen Sensordaten bezüglich des zu detektierenden Ereignisses zu berechnen. Dieser Opinionwert kann daraufhin auf einen eindimensionalen Wahrscheinlichkeitswert projiziert werden. Dies ermöglicht es, eine einfach vergleichbare Maßzahl für den entsprechenden Ausschnitt aus den Sensordaten zu berechnen und bereitzustellen.

In einer Ausführungsform ist eine Schwellwerterfassungseinrichtung vorgesehen, die dazu ausgebildet ist, für mindestens eines der Merkmale aus der Menge von Merkmalen einen basierend auf dem Satz von Bewertungskriterien gebildeten Schwellwert zu erfassen und diejenigen Ausschnitte der aufgenommenen Sensordaten, für die das mindestens eine Merkmal den entsprechenden vorgegebenen Schwellwert unterschreitet, aus der Detektion des zu detektierenden Merkmals auszuschließen. Dadurch kann der Rechenaufwand für die folgenden Berechnungen verringert werden.

In einer Ausführungsform ist die Detektionseinrichtung dazu ausgebildet, zu den erfassten Bewertungen basierend auf den dem Satz von Bewertungskriterien korrespondierenden arithmetischen Regeln jeweils einen Opinionwert für zumindest einen Ausschnitt der aufgenommenen Sensordaten bezüglich des zu detektierenden Ereignisses zu berechnen. Dies ermöglicht es, auch für die Bewertungen eine einfach vergleichbare Maßzahl zu berechnen und bereitzustellen.

In einer Ausführungsform ist die Detektionseinrichtung dazu ausgebildet, beim Detektieren mindestens einen Ausschnitt der Sensordaten, für welchen eine Wahrscheinlichkeit für das Auftreten des zu detektierenden Ereignisses einen aus den erfassten Bewertungen berechneten Opinionwert und dem davon abgeleiteten Wahrscheinlichkeitswert übertrifft, basierend auf den dem Satz von Bewertungskriterien korrespondierenden arithmetischen Regeln und den zu den extrahierten Merkmalen berechneten Opinionwerten zu identifizieren. Dadurch wird eine sehr einfache Detektion eines Ereignisses in Sensordaten ermöglicht.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Inhaltsangabe der Zeichnungen

Die vorliegende Erfindung wird nachfolgend anhand der in den schematischen Figuren der Zeichnungen angegebenen Ausführungsbeispiele näher erläutert. Es zeigen dabei:

Fig. 1    ein Blockschaltbild einer Ausführungsform einer erfindungsgemäßen Vorrichtung;

Fig. 2    ein Ablaufdiagramm einer Ausführungsform eines erfindungsgemäßen Verfahrens;

Fig. 3    ein Diagramm einer Ausführungsform einer erfindungsgemäßen Bewertung;

Fig. 4    eine Darstellung einer Ausführungsform einer erfindungsgemäßen Bewertungserfassungseinrichtung;

Fig. 5    eine Darstellung einer Ausführungsform einer erfindungsgemäßen Schwellwerterfassungseinrichtung.

In allen Figuren sind gleiche bzw. funktionsgleiche Elemente und Vorrichtungen - sofern nichts anderes angegeben ist - mit denselben Bezugszeichen versehen worden.

Beschreibung von Ausführungsbeispielen

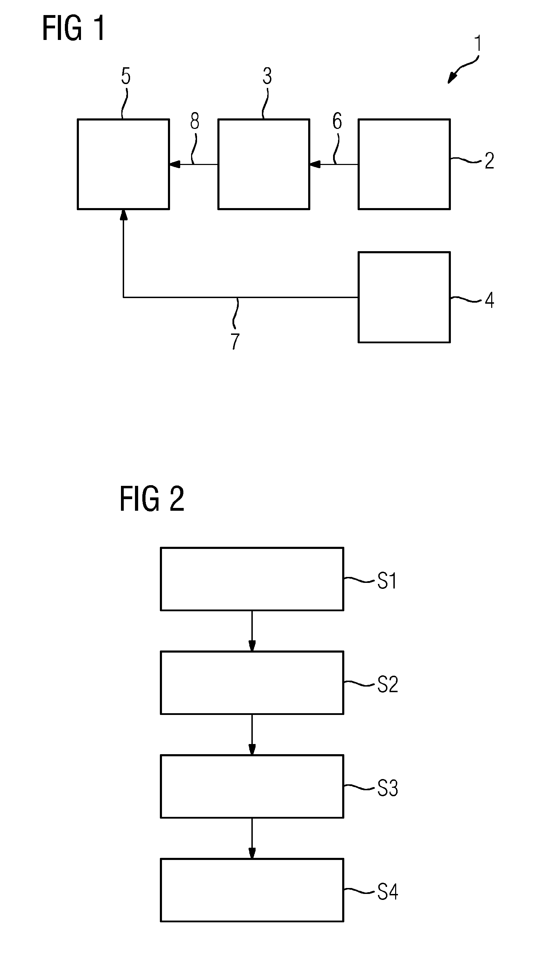

Fig. 1 zeigt ein Blockschaltbild einer Ausführungsform einer erfindungsgemäßen Vorrichtung 1.

Die Vorrichtung 1 in Fig. 1 weist eine Aufnahmeeinrichtung 2 auf, welche mit einer Merkmalsidentifikationseinrichtung 3 gekoppelt ist. Die Merkmalsidentifikationseinrichtung 3 wiederum ist mit einer Detektionseinrichtung 5 gekoppelt. Die Vorrichtung 1 weist ferner eine Bewertungserfassungseinrichtung 4 auf, die ebenfalls mit der Detektionseinrichtung 5 gekoppelt ist.

In einer Ausführungsform ist die Aufnahmeeinrichtung 2 als Videokamera 2 ausgeführt, die die Sensordaten als eine Videoaufnahme 6 aufnimmt.

Diese Videoaufnahme 6 stellt die Videokamera 2 der Merkmalsidentifikationseinrichtung 3 bereit, die eine Vielzahl von Merkmalen 8 in den Videoaufnahmen 6 identifiziert. Dabei kann die Merkmalsidentifikationseinrichtung 3 die Videoaufnahme 6 in Echtzeit verarbeiten oder abwarten, bis die gesamte Videoaufnahme 6 bereitsteht, bis die Merkmale 8 in der Videoaufnahme analysiert werden. Dazu kann die Videoaufnahme 6 z.B. auch in einem Datenspeicher zwischengespeichert werden.

Die Merkmalsidentifikationseinrichtung 3 in Fig. 1 ist dazu ausgebildet, in der Videoaufnahme 6 die Anzahl der in einer Szene vorhandenen Personen, die Ausrichtung der Personen und/oder deren Gesichter, die Dauer der Szene und die Position der Szene in der Videoaufnahme automatisch zu identifizieren. Dabei kann sich die Merkmalsidentifikationseinrichtung 3 in einer Ausführungsform einer Vielzahl bekannter Merkmalsextraktoren bedienen.

Ferner ist die Bewertungserfassungseinrichtung 4 dazu ausgebildet, als Bewertungen von einem Experten eine Relevanz (z.B. als "Subjective Opinions") oder auch einen sog. Opinionwert für die Merkmale 8 abzufragen, die die Merkmalsidentifikationseinrichtung 3 identifiziert hat. Die Bewertungserfassungseinrichtung 4 fragt als Bewertungen von einem Benutzer also eine Relevanz für die Merkmale:

Anzahl der in einer Szene vorhandenen Personen;
Ausrichtung der Personen und/oder deren Gesichter;
Dauer der Szene; und
Position der Szene in der Videoaufnahme

von einem Benutzer ab. Dabei können für die einzelnen Merkmale 8 z.B. Werte vorgegeben werden und der Experte bewertet die Relevanz eines Merkmals 8 in Kombination mit den vorgegebenen Werten. Dadurch wird das Verständnis des Experten zu der gegebenen Aufgabe modelliert und für automatische Berechnungen nutzbar gemacht.

Beispielsweise kann für die Anzahl der Personen vorgegeben werden, dass drei Personen in einer Szene zu sehen sein müssen, um das Merkmal 8 der "Anzahl der in einer Szene vorhandenen Personen" zu erfüllen. Werden nur zwei Personen in einer Szene identifiziert, gilt dieses Merkmal 8 als nicht erfüllt. Es können aber z.B. auch zwei Merkmale zu der "Anzahl der in einer Szene vorhandenen Personen" definiert werden, wobei einmal drei und einmal zwei Personen oder andere Anzahlen von Personen vorgegeben werden.

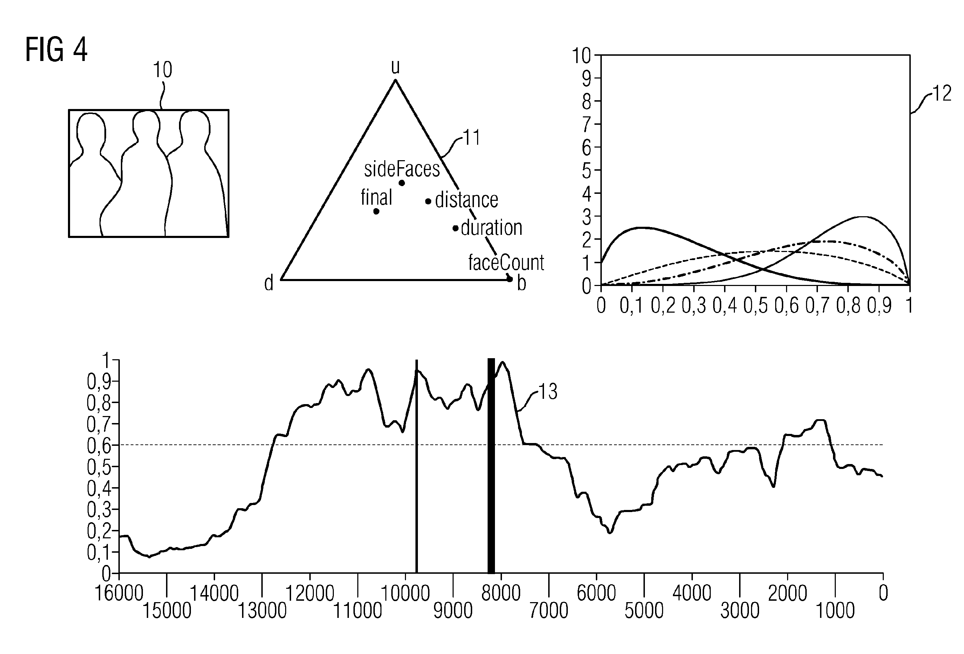

In der Ausführungsform der Fig. 1 werden die Bewertungen 7 als "Subjective Opinions" geeignet modelliert, die basierend auf den Grundlagen der "Subjective Logic" erstellt werden, d.h. die Bewertungen entsprechen möglichst genau den realen, tatsächlich auftretenden Gegebenheiten. Eine Ausführungsform der Bewertungserfassungseinrichtung 4 wird unter Fig. 4 näher erklärt.

Schließlich detektiert die Detektionseinrichtung 5 basierend auf den identifizierten Merkmalen 8, dem Bewertungsmodell, welches aus dem Satz von Bewertungskriterien hervorgeht, und den abgefragten Relevanzen der Merkmale 8 in den Sensordaten 6 ein zu detektierendes Ereignis basierend auf dem Kalkül der "Subjective Logic".

In einem einfachsten und intuitivsten Fall, werden die einzelnen von einem Experten modellierten Bewertungen 7 mittels einer UND-Verknüpfung kumuliert. Diese Kumulation mittels einer UND-Verknüpfung wird in der "Subjective Logic" mit dem ^-Operator ausgedrückt.

Vor dem Kumulieren der einzelnen Bewertungen 7 mittels einer Konjunktion entsprechend der "Subjective Logic" kann auch eine Schwellwertbildung erfolgen, durch welche diejenigen Merkmale 8, deren Relevanz für die Detektion des Ereignisses eine vorgegeben Schwelle unterschreitet, aus der Menge der Merkmale 8 entfernt werden. Dadurch kann der Rechenaufwand für die folgenden Berechnungen verringert werden. Der jeweilige Schwellwert kann dabei auch als Opinionwert dargestellt werden.

Anschließend berechnet die Detektionseinrichtung 5 für jede Szene aus den kumulierten Bewertungen 7, einen eindimensionalen Wahrscheinlichkeitswert. Anhand des berechneten Wahrscheinlichkeitswertes erstellt die Detektionseinrichtung 5 eine Reihenfolge der einzelnen Szenen beginnend mit derjenigen Szene, welche den höchsten Wahrscheinlichkeitswert aufweist.

Da das Detektieren von Ereignissen Prinzip-bedingt nicht mit einhundertprozentiger Sicherheit sondern lediglich mit einer entsprechenden Wahrscheinlichkeit durchgeführt werden kann, ist unter dem Begriff des Detektierens kein exaktes Detektieren, sondern ein Abschätzen des Vorhandenseins eines Ereignisses in den Sensordaten zu verstehen.

Dementsprechend sind diejenigen Szenen, welche für die kumulierten Bewertungen 7 die höchsten Werte aufweisen, diejenigen Szenen, welch das zu detektierende Ereignis mit der größten Wahrscheinlichkeit enthalten.

In einer Ausführungsform kann es z.B. eine Aufgabe sein, in einer Fernsehsendung, bei welcher ein Moderator mit den Gästen der Fernsehsendung Wetten abschließt, diejenigen Szenen zu identifizieren, in welcher der Moderator eine Wette verkündet.

Die Menge der Merkmale umfasst in dieser Ausführungsform z.B.:

Zeitlicher Abstand einer Szene zu der Wette;
Dauer der Szene;
Anzahl der Gesichter in der Szene;
Anzahl der Gesichter, welche in der Szene im Profil zu sehen sind.

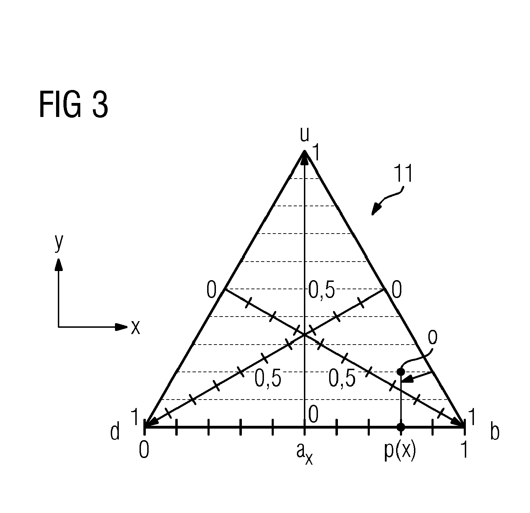

Ein Experte bewertet jedes Merkmal 8 entsprechend seiner Auffassung bezüglich der Relevanz des jeweiligen Merkmals 8. Dazu stehen ihm vier Parameter entsprechend der "Subjective Logic" bereit, welche er z.B. zu jedem Merkmal 8 in einem Opinion-Dreieck 11 eintragen kann. Die Parameter sind das Zutreffen eines Merkmals, das Nicht-Zutreffen eines Merkmals, die Unsicherheit des Experten gegenüber dem jeweiligen Merkmal, sowie die a-priori Eintrittswahrscheinlichkeit des Merkmals. Ein entsprechendes Opinion-Dreieck 11 wird in Fig. 3 gezeigt.

Schließlich kumuliert die Detektionseinrichtung 5 für jede Szene die entsprechenden Bewertungen 7 und gibt eine Rangfolge für die Szenen aus, wobei die Szenen entsprechend dem Wert der kumulierten Bewertungen 7 angeführt werden.

In einer Ausführungsform sind die Merkmalsidentifikationseinrichtung 3, die Bewertungserfassungseinrichtung 4 und die Detektionseinrichtung 5 als Computerprogrammmodule ausgebildet, welche auf einem handelsüblichen Computer, welcher z.B. mit einem Windows- oder Linux-Betriebssystem betrieben wird, ausgebildet ist.

In weiteren Ausführungsformen sind die Merkmalsidentifikationseinrichtung 3, die Bewertungserfassungseinrichtung 4 und die Detektionseinrichtung 5 als anwendungsspezifische integrierte Schaltkreise, als programmierbare Logikbausteine, als Mikrocontroller oder allgemein als Hardware, Software, Firmware oder eine beliebige Kombination daraus ausgebildet.

Fig. 2 zeigt ein Ablaufdiagramm einer Ausführungsform eines erfindungsgemäßen Verfahrens.

In einem ersten Schritt S1 werden die Sensordaten 6 aufgenommen. Anschließend wird in einem zweiten Schritt S2 eine vorgegebene Menge von Merkmalen 8 der Sensordaten 6 in den aufgenommenen Sensordaten 6 automatisch identifiziert.

In einem dritten Schritt S3 wird jeweils eine auf das zu detektierende Ereignis bezogene und basierend auf einem Satz von Bewertungskriterien gebildete Bewertung 7 zu jedem der Merkmale 8 aus der vorgegebenen Menge von Merkmalen 8 von einem Experten modelliert.

Schließlich wird in einem vierten Schritt S4 das zu detektierende Ereignis automatisch mittels der identifizierten Merkmale 8 basierend auf den modellierten Bewertungen zu der vorgegebenen Menge von Merkmalen 8 detektiert.

Fig. 3 zeigt ein Diagramm einer Ausführungsform einer erfindungsgemäßen Bewertung 7 in einem Opinion-Dreieck 11.

Fig. 3 zeigt ein Opinion-Dreieck 11 gemäß den Regeln der "Subjective Logic", welches als gleichschenkliges Dreieck 11 ausgebildet ist. In Fig. 3 ist das Dreieck 11 derart orientiert, das die untere Seite des Dreiecks 11 horizontal liegt.

Ferner ist von der Mitte jeder der Seiten des Dreiecks 11 jeweils ein Pfeil in die der jeweiligen Seite gegenüberliegende Ecke des Dreiecks 11 als Maß-Achse eingetragen. Dabei stellt der Ursprung des Pfeils jeweils einen Wert von 0 und das Ende eines Pfeils einen Wert von 1 dar. Dabei steht der Pfeil von der unteren Seite des Dreiecks 11 in die obere Ecke des Dreiecks 11 den Wert "u" dar. Ferner stellt der Pfeil von der linken Seite des Dreiecks 11 in die rechte untere Ecke des Dreiecks 11 den Wert "b" dar. Schließlich stellt der Pfeil von der rechten Seite des Dreiecks 11 in die linke untere Ecke des Dreiecks 11 den Wert "d" dar.

Wird eine Bewertung (Opinion) in dem Opinion-Dreieck 11 der Fig. 3 eingetragen, so erfüllt diese Bewertung immer die Bedingung:

$$b+d+u = 1$$

Dabei steht der Wert "b" ("belief") dafür, wie sehr der Experte glaubt, dass dieses Merkmal für die Detektion des Ereignisses relevant ist. Genauso steht der Wert "d" ("disbelief") dafür, wie wenig der Experte glaubt, dass dieses Merkmal für die Detektion des Ereignisses relevant ist. Der Wert "u" gibt an, wie sicher sich der Experte ist, dass seine Einschätzung zutreffend ist. Ferner wird für in einem Opinion-Dreieck 11 immer auch ein Wert "a" angegeben, auch "atomicity" genannt, der die a-priori Wahrscheinlichkeit für ein Merkmal darstellt.

In Fig. 3 ist eine Bewertung O eingetragen, welche einen Wert "b" von 0,7, einen "d" Wert von 0,1 und einen "u" Wert von 0,2, sowie einen "$a_x$" Wert von 0,5 hat (ohne Beschränkung der Allgemeinheit). Dadurch kann ein Experte ausdrücken, dass er das jeweilige Merkmal als durchaus wichtig für die Detektion des Ereignisses ansieht ("b" = 0,7). Ferner drückt die Bewertung in Fig. 3 aus, dass der Experte sich auch relativ sicher ("u" = 0,2) bezüglich seiner Bewertung ist.

In dem Opinion-Dreieck 11 ist ferner eine Senkrechte von der Bewertung O auf die untere Seite des Dreiecks 11 eingezeichnet. Der Projektionspunkt von O parallel zur Geraden durch die Punkte "u" und "$a_x$" der Senkrechten auf der unteren Seite des Dreiecks 11 kennzeichnet die Wahrscheinlichkeit, dass das entsprechende Merkmal 8, entsprechend der herkömmlichen Wahrscheinlichkeitsbetrachtung, zutreffend ist und kann daher einen Wert zwischen 0 (linke untere Ecke des Dreiecks 11) und 1 (rechte untere Ecke des Dreiecks 11) annehmen.

In Fig. 3 ist in der Mitte der unteren Achse des Dreiecks 11 ferner ein Wert $a_x$ = 0.5 dargestellt, welcher die sog. Atomizität ("atomicity") für das Opinion-Dreieck 11 darstellt.

Fig. 4 zeigt eine Darstellung einer Ausführungsform einer erfindungsgemäßen Bewertungserfassungseinrichtung 4.

Die Bewertungserfassungseinrichtung 4 in Fig. 4 ist als Darstellung eines Computerbildschirms dargestellt, in welcher ein Experte in einem Opinion-Dreieck 11 seine Bewertungen für die Relevanz für eine Vielzahl von Merkmalen 8 eingeben kann. Dabei bezieht sich die Fig. 4 auf das Beispiel der Fig. 1 in welchem Szenen einer Sendung analysiert werden, welche das Abschließen von Wetten mit den Gästen der Sendung zum Inhalt hat. Die Aufgabe ist weiterhin, diejenigen Szenen zu identifizieren, in welchen die jeweiligen Wetten verkündet werden.

Dazu weist die Bewertungserfassungseinrichtung 4 einen oberen Bereich auf, in welchem dem Benutzer ein Ausschnitt 10 der Sensordaten, das Opinion-Dreieck 11 und die Wahrscheinlichkeitsdichtefunktionen 12 der einzelnen Bewertungen angezeigt werden.

In einem unteren Teil der Bewertungserfassungseinrichtung 4 wird dem Benutzer der Verlauf über die Zeit des Wahrscheinlichkeitswertes der einzelnen Abschnitte der Sensordaten gezeigt.

In dem Opinion-Dreieck 11 in Fig. 4 sind vier Bewertungen 7 und der daraus kumulierte Bewertungswert "final" eingetragen. Die Bewertungen 7 beziehen sich auf die Anzahl der Gesichter, welche im Profil zu sehen sind, den zeitlicher Abstand der Szene zu der Wette, die Dauer der Szene und die Anzahl der Gesichter, welche in der Szene identifiziert wurden.

In dem unteren Bereich der Bewertungserfassungseinrichtung 4 ist eine Wahrscheinlichkeitswertkurve dargestellt, welche den Wahrscheinlichkeitswert für die einzelnen Szenen der Sendung entsprechend den aktuellen Bewertungen 7 angibt. Ferner sind zwei Szenen markiert, für welche der Wahrscheinlichkeitswert einen vorgegebenen (z.B. von einem Experten abgefragten) Mindestwert überschreitet.

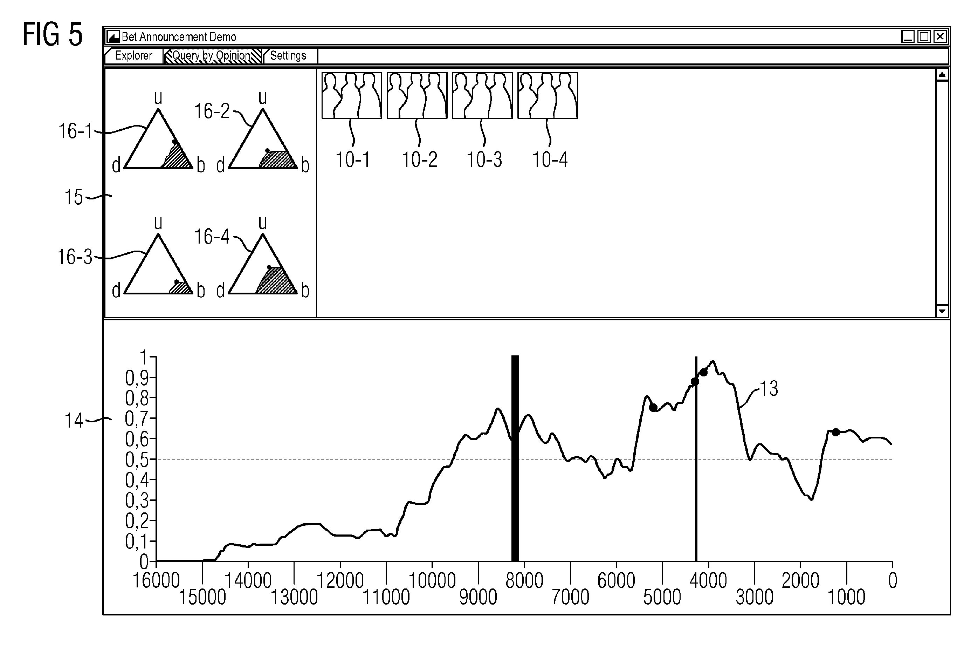

Fig. 5 zeigt eine Darstellung einer Ausführungsform einer erfindungsgemäßen Schwellwerterfassungseinrichtung 14.

Die Schwellwerterfassungseinrichtung 14 in Fig. 5 ist ebenfalls als Darstellung eines Computerbildschirms dargestellt, in welcher ein Experte vier als Opinion ausgeführte Schwellwerte 16-1 - 16-4 in Form einer Dreiecks-Repräsentation für die vier Merkmale:

Zeitlicher Abstand einer Szene zu der Wette;
Dauer der Szene;
Anzahl der Gesichter in der Szene; und
Anzahl der Gesichter, welche in der Szene im Profil zu sehen sind

eingeben kann. Dabei bezieht sich die Fig. 5 ebenfalls auf das Beispiel der Fig. 1 in welchem Szenen einer Sendung analysiert werden, welche das Abschließen von Wetten mit den Gästen der Sendung zum Inhalt hat. Die Aufgabe ist weiterhin, diejenigen Szenen zu identifizieren, in welchen die jeweiligen Wetten verkündet werden.

Dazu weist die Schwellwerterfassungseinrichtung 14 einen oberen Bereich auf, in welchem dem Benutzer bzw. Experten in einer Schwellwerteinrichtung 15 vier Opinion-Dreiecke für die Schwellwerte 16-1 - 16-4 zu den oben genannten Merkmalen angezeigt werden. In diesen Opinion-Dreiecken kann der Benutzer bzw. Experte durch Ziehen eines Punktes z.B. mit einer Computer Maus oder durch Deuten auf den Punkt an einem Touchscreen die jeweiligen Schwellwerte 16-1 - 16-4 festlegen. In den weiteren Berechnungen zur Detektion S4 des zu detektierenden Ereignisses werden daraufhin nur diejenigen Ausschnitte aus den Sensordaten verwendet 10-1 - 10-4 und in dem oberen Bereich als Bildausschnitte angezeigt, für welche alle Merkmale über dem entsprechenden Schwellwert 16-1 - 16-4 liegen.

Im unteren Teil der Schwellwerterfassungseinrichtung 14 wird dem Benutzer der Verlauf über die Zeit des Wahrscheinlichkeitswertes der einzelnen Abschnitte der Sensordaten gezeigt.

Wird eine Schwellwerterfassungseinrichtung 14 vorgesehen, kann die Anzahl der Berechnungen reduziert werden. Ferner kann die Anzahl der Ausschnitte aus den Sensordaten, welche nach der Detektion evtl. eine Person analysieren muss reduziert werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

**Patentansprüche**

1. Vorrichtung (1) zur automatischen Detektion eines Ereignisses in Sensordaten (6), mit
einer Aufnahmeeinrichtung (2), welche dazu ausgebildet ist, die Sensordaten (6) aufzunehmen;
einer Merkmalsidentifikationseinrichtung (3), welche dazu ausgebildet ist, eine vorgegebene Menge von Merkmalen (8) der Sensordaten (6) in den aufgenommenen Sensordaten (6) automatisch zu identifizieren;
einer Bewertungserfassungseinrichtung (4), welche dazu ausgebildet ist, jeweils eine auf das zu detektierende Ereignis bezogene und basierend auf einem Satz von Bewertungskriterien gebildete Bewertung (7) zu jedem der Merkmale (8) aus der vorgebenen Menge von Merkmalen (8) zu erfassen; und
mit einer Detektionseinrichtung (5), welche dazu ausgebildet ist, das zu detektierende Ereignis mittels der durch die Merkmalsidentifikationseinrichtung (3) identifizierten Merkmale (8) basierend auf den erfassten Bewertungen zu der vorgegebenen Menge von Merkmalen (8) automatisch zu detektieren.

2. Vorrichtung nach Anspruch 1,
**dadurch gekennzeichnet, dass**
die Aufnahmeeinrichtung (2) zumindest eine Kamera und/oder ein Mikrofon und/oder einen Positionssensor und/oder einen Lagesensor und/oder einen Beschleunigungsmesser und/oder einen Helligkeitssensor zur Aufnahme der Sensordaten (6) aufweist.

3. Vorrichtung nach einem der vorherigen Ansprüche,
**dadurch gekennzeichnet, dass** die Merkmalsidentifikationseinrichtung (3) dazu ausgebildet ist, beim Identifizieren:

in den aufgenommenen Sensordaten (6) ein Muster zu identifizieren; und/oder
in als eine Bildaufnahme und/oder Videoaufnahme vorliegenden Sensordaten (6) enthaltene Objekte zu identifizieren; und/oder
in der Bildaufnahme und/oder Videoaufnahme die Anzahl der vorhandenen Personen zu identifizieren; und/oder in der Bildaufnahme und/oder Videoaufnahme die Ausrichtung und/oder Position und/oder Bewegungsrichtung und/oder Bewegung zumindest einer in der Bildaufnahme und/oder Videoaufnahme enthaltenen Personen zu identifizieren; und/oder in der Videoaufnahme einen Wechsel zwischen zumindest zwei Szenen zu identifizieren; und/oder
in als eine Tonaufnahme vorliegenden Sensordaten (6) ein potentiell auf ein Auftreten des zu detektierenden Ereignisses hinweisendes Geräusch zu identifizieren; und/oder in der Tonaufnahme einen Wechsel zwischen zumindest zwei Szenen zu identifizieren; und/oder
in der Tonaufnahme zumindest eine in der Tonaufnahme enthaltene Anzahl menschlicher Stimmen zu identifizieren.

4. Vorrichtung nach einem der vorherigen Ansprüche,
**dadurch gekennzeichnet, dass**
der Satz von Bewertungskriterien Bewertung (7) einen Akzeptanzwert und/oder einen Ablehnungswert und/oder einen Unsicherheitswert und/oder einen Basis-Wert aufweist; und
die Bewertungserfassungseinrichtung (4) dazu ausgebildet ist, zu jeder Bewertung (7) einen entsprechenden Akzeptanzwert und/oder einen entsprechenden Ablehnungswert und/oder einen entsprechenden Unsicherheitswert und/oder einen entsprechenden Basis-Wert zu erfassen.

5. Vorrichtung nach einem der vorherigen Ansprüche,

**dadurch gekennzeichnet, dass**
die Detektionseinrichtung (5) dazu ausgebildet ist, zu den extrahierten Merkmalen (8) basierend auf zu dem Satz von Bewertungskriterien korrespondierenden arithmetischen Regeln jeweils einen Opinionwert für zumindest einen Ausschnitt der aufgenommenen Sensordaten (6) bezüglich des zu detektierenden Ereignisses zu berechnen.

6. Vorrichtung nach einem der vorherigen Ansprüche, **dadurch gekennzeichnet, dass** eine Schwellwerterfassungseinrichtung vorgesehen ist, die dazu ausgebildet ist, für mindestens eines der Merkmale aus der Menge von Merkmalen einen basierend auf dem Satz von Bewertungskriterien gebildeten Schwellwert zu erfassen und diejenigen Ausschnitte der aufgenommenen Sensordaten, für die das mindestens eine Merkmal den vorgegebenen Schwellwert unterschreitet, aus der Detektion des zu detektierenden Merkmals auszuschließen.

7. Vorrichtung nach einem der vorherigen Ansprüche, **dadurch gekennzeichnet, dass** die Detektionseinrichtung (5) dazu ausgebildet ist, zu den erfassten Bewertungen basierend auf den dem Satz von Bewertungskriterien korrespondierenden arithmetischen Regeln jeweils einen Opinionwert für zumindest einen der Ausschnitte der aufgenommenen Sensordaten (6) bezüglich des zu detektierenden Ereignisses zu berechnen.

8. Vorrichtung nach Ansprüchen 6 und 7, **dadurch gekennzeichnet, dass** die Detektionseinrichtung (5) dazu ausgebildet ist, beim Detektieren mindestens einen der Ausschnitte der Sensordaten (6), für welchen eine Wahrscheinlichkeit für das Auftreten des zu detektierenden Ereignisses einen aus den erfassten Bewertungen berechneten Wahrscheinlichkeitswert übertrifft, basierend auf den dem Satz von Bewertungskriterien korrespondierenden arithmetischen Regeln und den zu den extrahierten Merkmalen (8) berechneten Opinionwerten zu identifizieren.

9. Verfahren zum automatischen Detektieren eines Ereignisses in Sensordaten (6), mit den Schritten:

Aufnehmen (S1) der Sensordaten (6);
automatisches Identifizieren (S2) einer vorgegebenen Menge von Merkmalen (8) der Sensordaten (6) aus den aufgenommenen Sensordaten (6);
Modellieren (S3) jeweils einer auf das zu detektierende Ereignis bezogenen und basierend auf einem Satz von Bewertungskriterien gebildeten Bewertung (7) zu jedem der Merkmale (8) aus der vorgegebenen Menge von Merkmalen (8); und

automatisches Detektieren (S4) des zu detektierenden Ereignisses mittels der identifizierten Merkmale (8) basierend auf den erfassten Bewertungen zu der vorgegebenen Menge von Merkmalen (8).

10. Verfahren nach Anspruch 8, **dadurch gekennzeichnet, dass** die Sensordaten (6) mittels einer Kamera und/oder eines Mikrofons und/oder eines Positionssensors und/oder eines Lagesensors und/oder eines Beschleunigungssensors und/oder eines Helligkeitssensors aufgenommen werden.

11. Verfahren nach einem der vorherigen Ansprüche 9 und 10, **dadurch gekennzeichnet, dass** beim automatischen Identifizieren (S2):

in den aufgenommenen Sensordaten (6) ein Muster identifiziert wird; und/oder
in als eine Bildaufnahme und/oder Videoaufnahme vorliegenden Sensordaten (6) enthaltene Objekte identifiziert werden; und/oder
in der Bildaufnahme und/oder Videoaufnahme die Anzahl der vorhandenen Personen identifiziert wird; und/oder in der Bildaufnahme und/oder Videoaufnahme die Ausrichtung und/oder Position und/oder Bewegungsrichtung und/oder Bewegung zumindest einer in der Bildaufnahme und/oder Videoaufnahme enthaltenen Personen identifiziert wird; und/oder in der Videoaufnahme einen Wechsel zwischen zumindest zwei Szenen identifiziert wird; und/oder
in als eine Tonaufnahme vorliegenden Sensordaten (6) ein potentiell auf ein Auftreten des zu detektierenden Ereignisses hinweisendes Geräusch identifiziert wird; und/oder in der Tonaufnahme ein Wechsel zwischen zumindest zwei Szenen identifiziert wird; und/oder
in der Tonaufnahme zumindest eine in der Tonaufnahme enthaltene Anzahl menschlicher Stimmen identifiziert wird.

12. Verfahren nach einem der vorherigen Ansprüche 9 bis 11, **dadurch gekennzeichnet, dass** der Satz von Bewertungskriterien einen Akzeptanzwert und/oder einen Ablehnungswert und/oder einen Unsicherheitswert und/oder einen Basis-Wert aufweist; und beim Erfassen der Bewertungen zu jedem der Merkmale (8) ein entsprechender Akzeptanzwert und/oder ein entsprechender Ablehnungswert und/oder ein entsprechender Unsicherheitswert und/oder ein entsprechender Basis-Wert erfasst und/oder modelliert wird.

13. Verfahren nach einem der vorherigen Ansprüche 9 bis 12, **dadurch gekennzeichnet, dass**
beim automatischen Analysieren zu den extrahierten Merkmalen (8) basierend auf zu dem Satz von Bewertungskriterien korrespondierenden arithmetischen Regeln jeweils ein Opinionwert für zumindest einen Ausschnitt der aufgenommenen Sensordaten (6) bezüglich des zu detektierenden Ereignisses berechnet wird; und
beim automatischen Analysieren zu den erfassten Bewertungen basierend auf den dem Satz von Bewertungskriterien korrespondierenden arithmetischen Regeln jeweils ein Opinionwert für zumindest einen der Ausschnitte der aufgenommenen Sensordaten (6) bezüglich des zu detektierenden Ereignisses berechnet wird.

14. Verfahren nach Anspruch 13,
**dadurch gekennzeichnet, dass**
beim automatischen Detektieren mindestens einer der Ausschnitte der Sensordaten (6), basierend auf den dem Satz von Bewertungskriterien korrespondierenden arithmetischen Regeln und den zu den extrahierten Merkmalen (8) berechneten Opinionwerten, identifiziert wird, für welchen eine Wahrscheinlichkeit für das Auftreten des zu detektierenden Ereignisses einen aus den erfassten Bewertungen berechneten Wahrscheinlichkeitswert übertrifft.

15. Verfahren nach einem der vorherigen Ansprüche 9 bis 14,
**dadurch gekennzeichnet, dass**
vor dem automatischen Detektieren (S4) für mindestens eines der Merkmale aus der Menge von Merkmalen ein basierend auf dem Satz von Bewertungskriterien gebildeter Schwellwert erfasst wird und diejenigen Ausschnitte der aufgenommenen Sensordaten, für die das mindestens eine Merkmal den vorgegebenen Schwellwert unterschreitet, aus der Detektion des zu detektierenden Merkmals ausgeschlossen werden.

## FIG 1

## FIG 2

FIG 3

FIG 4

FIG 5

EP 2 602 739 A1

Europäisches Patentamt
European Patent Office
Office européen des brevets

**EUROPÄISCHER RECHERCHENBERICHT**

Nummer der Anmeldung

EP 12 17 0411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 333 736 A2 (SIEMENS AG [DE]) 15. Juni 2011 (2011-06-15) * das ganze Dokument * ----- | 1-15 | INV. G06K9/00 G06K9/62 G06F17/30 |
| X | MALTONI DAVIDE ET AL: "Handbook of Fingerprint Recognition, chapter 7 (Biometric Fusion)", 4. Mai 2009 (2009-05-04), HANDBOOK OF FINGERPRINT RECOGNITION, SPRINGER, LONDON, GB, PAGE(S) 303 - 339, XP002613192, ISBN: 978-1-84882-253-5 * section 7.9: "Score level fusion"; Abbildung 7.5 * ----- | 1-15 | |
| T | Audun Jøsang: "Artificial Reasoning with Subjective Logic", Proceedings of the Second Australian Workshop on Commonsense Reasoning, 1. Januar 1997 (1997-01-01), Seiten 1-17, XP055050275, Perth, Australia Gefunden im Internet: URL:http://persons.unik.no/josang/papers/Jos1997-AWCR.pdf [gefunden am 2013-01-18] ----- | 1-15 | RECHERCHIERTE SACHGEBIETE (IPC) G06K G06F |
| T | Audun Jøsang: "Subjective Logic", , 4. Januar 2012 (2012-01-04), Seiten 1-69, XP055050269, Oslo, Norway Gefunden im Internet: URL:http://persons.unik.no/josang/papers/subjective_logic.pdf [gefunden am 2013-01-18] * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 18. Januar 2013 | Neubüser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 17 0411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2013

| Im Recherchenbericht angeführtes Patentdokument | Datum der Veröffentlichung | Mitglied(er) der Patentfamilie | Datum der Veröffentlichung |
|---|---|---|---|
| EP 2333736        A2 | 15-06-2011 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2333736 A2